# EUROPÄISCHE PATENTSCHRIFT

(11) **EP 0 772 788 B1**
(45) Veröffentlichungstag und Bekanntmachung des Hinweises auf die Patenterteilung: **29.11.2000**
(21) Anmeldenummer: 96914191.0
(22) Anmeldetag: 09.05.1996
(51) Int. Cl.: G01V 8/12

(54) **VERFAHREN UND VORRICHTUNG ZUR ELIMINATION VON STÖRSIGNALEN BEI EINER LICHTSCHRANKE**
PROCESS AND DEVICE FOR ELIMINATING INTERFERENCE SIGNALS IN A LIGHT BARRIER
PROCEDE ET DISPOSITIF POUR L'ELIMINATION DE SIGNAUX PARASITES DANS UNE BARRIERE LUMINEUSE

(30) Priorität: 30.05.1995 DE 19519659
(43) Veröffentlichungstag der Anmeldung: 14.05.1997
(73) Patentinhaber: Leuze Electronic Gmbh + Co, 73277 Owen (DE)
(72) Erfinder: OLLHÄUSER, Helmut, D-73266 Bissingen (DE)
(86) Internationale Anmeldenummer: EP9601975
(87) Internationale Veröffentlichungsnummer: WO9638742

(56) Entgegenhaltungen:
- DE-A- 4 323 910
- US-A- 5 057 683
- PATENT ABSTRACTS OF JAPAN vol. 9, no. 225 (E-342), 11.September 1985 & JP,A,60 084013 (TATEISHI DENKI KK), 13.Mai 1985,
- PATENT ABSTRACTS OF JAPAN vol. 009, no. 225 (E-342), 11.September 1985 & JP,A,60 084012 (TATEISHI DENKI KK), 13.Mai 1985,

## Beschreibung

Die Erfindung betrifft ein Verfahren und eine Vorrichtung zur Elimination von Störsignalen bei einer Lichtschranke.

Eine derartige Lichtschranke ist aus der DE-PS 43 23 910 bekannt. Der Sender sendet periodisch Lichtimpulse mit einer definierten Pulsdauer und einer darauffolgenden Sendepause aus. Dem Empfänger ist ein Zähler nachgeschaltet, in dem die auf den Empfänger auftreffenden Lichtpulse gezählt werden. Der Zähler ist an eine mehrkanalige Auswerteeinheit angeschlossen. Jeder Kanal weist einen Ausgang auf, der auf eine Logikeinheit geführt ist.

In Abhängigkeit der Anzahl der registrierten Lichtimpulse erfolgen an den Ausgängen der Kanäle für definierte Zeitintervalle Signalwechsel, die in der Logikeinheit so verarbeitet werden, daß an deren Ausgang eine Signalfolge mit einem definierten Puls-Pausen-Verhältnis vorliegt. Diese Signalfolge kann in eindeutiger Weise der vom Sender emittierten Lichtimpulsfolge zugeordnet werden. Bei Auftreten von internen oder externen Störungen wird das Puls-Pausen-Verhältnis der Signalfolge geändert, wodurch eine Störung erkannt werden kann.

Eine derartige mehrkanalige Auswertung von Empfangssignalen ist insbesondere geeignet, um mit großer Sicherheit eventuell intern auftretende Bauteilfehler zu erkennen. Dies ist insbesondere dann von Bedeutung, wenn derartige Lichtschranken im Bereich des Personenschutzes eingesetzt werden sollen, wo sehr hohe Sicherheitsanforderungen gestellt werden. Die Auswerteeinheit, die die geforderte Sicherheit gewährleistet, ist entsprechend aufwendig.

Der Erfindung liegt die Aufgabe zugrunde, einen störungsfreien Betrieb einer Lichtschranke der eingangs genannten Art zu gewährleisten.

Zur Lösung dieser Aufgabe sind die Merkmale des Anspruchs 1 vorgesehen. Vorteilhafte Ausführungsformen und zweckmäßige Weiterbildungen der Erfindung sind in den Ansprüchen 2 - 8 beschrieben.

Der Grundgedanke der vorliegenden Erfindung besteht darin, daß die Auswertung der Empfangssignale synchron zu den vom Sender emittierten Lichtimpulse erfolgt.

Bei Lichtschranken stellen der Sender und der Empfänger getrennte Systeme dar, die in Abstand zueinander angeordnet sind. Zwischen diesen Systemen besteht keine Verbindung über Zuleitungen. Eine direkte Synchronisation von Sender und Empfänger über eine derartige Zuleitung ist daher prinzipiell nicht möglich.

Erfindungsgemäß ist daher eine Auswerteeinheit an den Empfänger angeschlossen, die nur innerhalb zeitlich begrenzter Aktivierungsintervalle die am Ausgang des Empfängers anstehenden Empfangssignale registriert. Bei störungsfreiem Betrieb und freiem Strahlengang der Lichtschranke erfolgt das Öffnen und Schließen eines der Aktivierungsintervalle synchron zu den vom Sender periodisch ausgesendeten Lichtimpulsen, wobei die Sendefrequenz bekannt ist und als Parameter in der Auswerteeinheit vorgegeben ist. Bei Fehlen einzelner Sendelichtimpulse, beispielsweise bei Eintritt eines Objektes in den Strahlengang der Lichtschranke oder bei Auftreten kurzer Störimpulse wird diese Betriebsart unterbrochen und es wird ein zweites Aktivierungsintervall, dessen maximale Dauer der Periodendauer Sendelichtimpulse entspricht, geöffnet.

Sobald innerhalb dieses Abtastintervalls ein Lichtimpuls in der Auswerteeinheit registriert wird, wird das zweite Aktivierungsintervall angeschlossen. Falls kein Lichtimpuls registriert wird, wird das zweite Aktivierungsintervall fortlaufend geöffnet und geschlossen, bis der nächste Lichtimpuls registriert wird. Danach wird periodisch das erste Aktivierungsintervall synchron zum Empfang der Lichtimpulse geöffnet.

Durch den synchronen Betrieb der Lichtschranke können sämtliche asynchron auftretenden Störimpulse auf einfache Weise ausgefiltert werden. Störungen des synchronen Betriebs können nur durch kurzzeitig auftretende Störimpulse auftreten, die nahezu gleichzeitig mit den periodisch vom Sender emittierten Lichtimpulsen registriert werden.

Durch die erfindungsgemäße Ausbildung der Aktivierungsintervalle erfolgt jedoch sehr schnell eine Neusynchronisation, wodurch der fehlerfreie Betrieb der Lichtschranke wieder hergestellt wird.

Die Erfindung wird im nachstehenden anhand der Zeichnungen erläutert. Es zeigen:

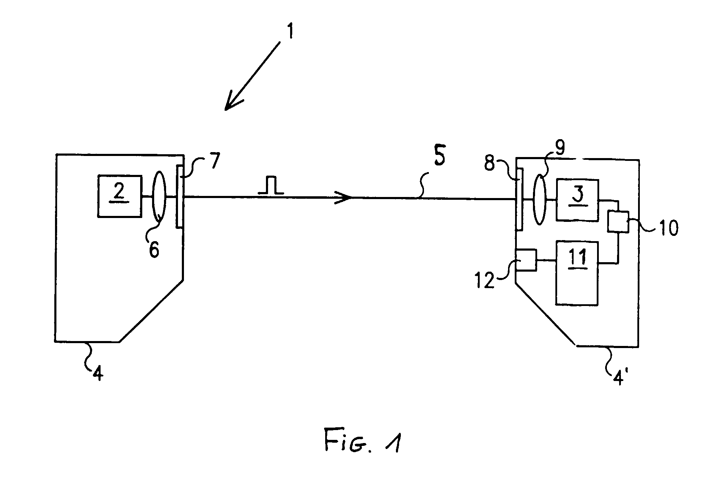

- Fig. 1: Eine schematische Darstellung der erfindungsgemäßen Lichtschranke,
- Fig. 2: Flußdiagramm des Ablaufs der Auswertung in der Auswerteeinheit,
- Fig. 3: Impulsdiagramm der vom Sender ermittierten Lichtimpulse und der in der Auswerteeinheit registrierten Lichtimpulse
a) synchroner Betrieb bei freiem Strahlengang,
b) Betrieb bei Unterbrechung des Strahlengangs,
c) Betrieb bei Störung des synchronen Betriebs.

In Fig. list eine Lichtschranke 1 mit einem Sender 2 und einem Empfänger 3 dargestellt. Der Sender 2 und der Empfänger 3 sind jeweils in einem Gehäuse 4, 4' integriert und in Abstand zueinander angeordnet. Der Sender 2, der beispielsweise von einer Leuchtdiode gebildet ist, emittiert Sendelicht 5 in Form von Lichtimpulsen. Das Sendelicht 5 wird von einer dem Sender 2 nachgeordneten Sendeoptik 6 fokussiert und durchdringt ein Austrittsfenster 7, welches in einer Wand des Gehäuses 4 angeordnet ist.

Ist der Strahlengang zwischen Sender 2 und Empfänger 3 frei, so durchdringt das Sendelicht 5 ein Austrittsfenster 8 in der Wand des Gehäuses 4' und wird über eine Empfangsoptik 9 auf den Empfänger 3 fokussiert.

Der Empfänger 3 ist beispielsweise als Photodiode ausgebildet und wandelt die auftreffenden Lichtimpulse in eine elektrische Signalfolge. Diese Empfangssignale werden einem Komparator 10 zugeführt, der kleine Störsignale ausfiltert. Der Ausgang des Komparators 10 ist auf eine Auswerteeinheit 11 geführt, die im vorliegenden Fall als Microcontroller ausgebildet ist.

Die am Ausgang des Komparators 10 anstehenden Empfangssignale werden über einen Eingang des Microcontrollers eingelesen. An einen Ausgang des Microcontrollers ist ein Störsignalgeber 12 angeschlossen.

Der Störsignalgeber 12 ist vorzugsweise als Leuchtdiode ausgebildet, welche in der Wand des Gehäuses 4' integriert ist.

Der Sender 2 emittiert periodische Lichtimpulse mit einer vorgegebenen Dauer T_{P}. Die Periodendauer beträgt T_{S}. Der Empfänger 3 wird dagegen im Dauerbetrieb betrieben und wandelt fortlaufend die auftreffenden Lichtimpulse in elektrische Signalfolgen. In der Auswerteeinheit 11 werden die eingelesenen Empfangssignale ausgewertet. Die entsprechende Auswertelogik ist im vorliegenden Ausführungsbeispiel als auf dem Microcontroller implementiertes Computerprogramm ausgebildet. Alternativ kann die Auswerteeinheit 11 von einer Hardware-Schaltung gebildet sein.

Die Auswertung der Empfangssignale in der Auswerteeinheit 11 erfolgt derart, daß die Empfangssignale nicht fortlaufend registriert werden, sondern nur zeitlich begrenzt während definierter Aktivierungsintervalle. Ein derartiges Aktivierungsintervall kann geöffnet oder geschlossen werden. indem einer bestimmten binären Variablen (Flag) der Wert eins oder null zugewiesen wird.

Jedem Aktivierungsintervall wird ein derartiges Flag zugeordnet. Das Aktivierungsintervall ist im vorliegenden Beispiel immer dann geöffnet, wenn das entsprechende Flag den Wert eins annimmt.

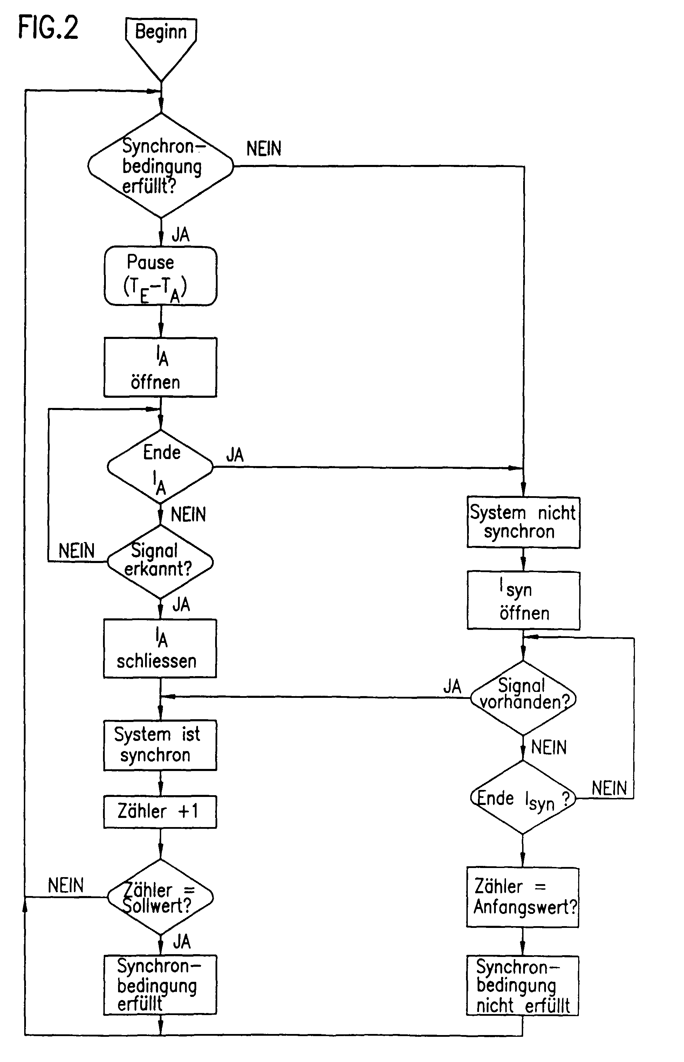

Die Auswertung der Empfangssignale ist aus dem Flußdiagramm in Fig. 2 ersichtlich. Die Lichtimpulse werden vom Sender 2 periodisch mit der Periodendauer T_{S} emittiert. Die Pulsdauer eines Lichtimpulses beträgt T_{P}. Diese Parameter sind bekannt und werden im Empfänger 3 zur Dimensionierung der einzelnen Aktivierungsintervalle verwendet.

Der Einschaltvorgang der Lichtschranke 1 ist im Flußdiagramm mit *"Beginn"* gekennzeichnet. Der Einschaltvorgang ist abgeschlossen, sobald ein erster Lichtimpuls in der Auswerteeinheit 11 registriert wird.

In einem ersten Schritt erfolgt eine Abfrage, ob die Synchronbedingung erfüllt ist. Nach Erkennen des ersten Lichtimpulses kann diese Bedingung noch nicht erfüllt sein, da hierzu wenigstens zwei aufeinanderfolgende Lichtimpulse registriert werden müssen.

In Abhängigkeit von der Erfüllung dieser Synchronbedingung verzweigt das Flußdiagramm in zwei verschiedene Zweige.

Zuerst wird der Fall behandelt, wenn die Synchronbedingung erfüllt ist. Dann wird in der Auswerteeinheit 11 eine Pause mit definierter Dauer ausgelöst. Die Dauer der Pause ist konstant, d. h. von äußeren Einflüssen, wie z. B. dem Empfang eines Lichtimpulses unabhängig. Innerhalb dieser Pause werden keine Lichtimpulse registriert.

Daran anschließend wird das Aktivierungsintervall I_{A} geöffnet. Die maximale Dauer dieses Aktivierungsintervalls I_{A} beträgt T_{A}, wobei T_{A} geringfügig größer als die Pulsdauer T_{P} ist. Die Dauer der vorangegangenen Pause beträgt T_{E} - T_{A}, wobei T_{E} die Periodendauer ist, mit der das Aktivierungsintervall I_{A} bei synchronem Betrieb von Sender 2 und Empfänger 3 geöffnet bzw. geschlossen wird.

Das Ende des Aktivierungsintervalls I_{A} wird im Microcontroller abgefragt *(Ende I*_{*A*} ?) Anschließend erfolgt die Abfrage *"Signal erkannt",* d. h. es wird abgefragt, ob innerhalb des Aktivierungsintervalls I_{A} ein Lichtimpuls registriert wird.

Die Periodendauer T_{E} ist einerseits wesentlich größer als T_{A}. Andererseits ist die Periodendauer T_{E} gleich oder nur unwesentlich größer als die Periodendauer T_{S}, mit der der Sender 2 die Lichtimpulse periodisch aussendet.

Die Größe der Periodendauer T_{E} ist abhängig davon, ob das Aktivierungsintervall I_{A} vollständig durchlaufen wird oder ob es nach Registrieren eines Lichtimpulses vorzeitig geschlossen wird. Im ersten Fall ist die Periodendauer T_{E} so gewählt, daß T_{E} geringfügig größer als T_{S} ist. Die Differenz T_{E} - T_{S} beinhaltet im wesentlichen die internen Laufzeiten durch die Schalt- und Verzögerungszeiten der empfangsseitigen Bauelemente sowie einen geringen Zuschlag, der eventuell vorhandene Bauteilstreuungen berücksichtigt.

Wenn der Sender 2 und der Empfänger 3 synchron arbeiten, muß demzufolge innerhalb T_{A} ein Lichtimpuls registriert werden. Das Auftreten dieses Lichtimpulses wird durch den Rücksprung nach der Abfrage *"Signal erkannt"* fortlaufend abgefragt, bis das Aktivierungsintervall I_{A} geschlossen wird. Ist innerhalb dieses Aktivierungsintervalls I_{A} kein Lichtimpuls registriert worden, liegt kein synchroner Betrieb vor und es erfolgt eine Abzweigung zum rechten Zweig des Flußdiagramms.

Wird dagegen ein Lichtimpuls erkannt, so wird unmittelbar danach, also vor Ablauf der Zeitspanne T_{A}, das Aktivierungsintervall I_{A} geschlossen (I_{A} *schliessen*).

Das *"System"* (Fig. 2) bestehend aus Sender 2, Empfänger 3 und der Auswerteeinheit 11 arbeitet somit synchron. Demzufolge wird der Wert eines Zählers um eins erhöht. Der Wert des Zählers gibt ein Maß für die Synchronität des Systems. Je höher der Zählerstand, desto mehr Lichtimpulse wurden bei synchronem Betrieb registriert. Es hat sich als vorteilhaft und ausreichend erwiesen, als Sollwert für den Zählerstand den Wert zwei zu wählen. Dies bedeutet, daß bereits bei zwei Lichtimpulsen, die bei synchronem Betrieb nacheinander empfangen werden, eine ausreichende Synchronisierung vorliegt.

Ist die Synchronbedingung erfüllt,wird eine entsprechende Kontrollvariable auf den Wert eins gesetzt. Die Kontrollvariable wird bei Beginn des nächsten Abfragezyklus von neuem abgefragt. Solange die Kontrollvariable den Wert eins annimmt, wird der an den Microcontroller angeschlossene Störsignalgeber 12 im Aus-Zustand gehalten, d. h. es wird keine Störmeldung ausgegeben, da synchroner Betrieb vorliegt.

Der rechte Zweig des Flußdiagramms wird durchlaufen, wenn das *"System nicht synchron"* arbeitet. Dies ist nach Inbetriebnahme der Lichtschranke 1 der Fall oder wenn innerhalb des Aktivierungsintervalls I_{A} kein Lichtimpuls registriert wird.

In diesem Fall wird ein zweites Aktivierungsintervall I_{SYN} geöffnet. Die Dauer dieses Aktivierungsintervalls T_{SYN} beträgt maximal T_{S}. Während dieses Zeitintervalls wird fortlaufend abgefragt, ob ein *"Signal vorhanden"* ist, d.h. ob ein Lichtimpuls registriert wurde. Sobald ein Lichtimpuls registriert wurde, wird das Aktivierungsintervall I_{SYN} geschlossen.

Mit der Erkennung dieses Lichtimpulses ist das System wieder synchron und es findet eine Verzweigung in dem linken Zweig des Flußdiagramms statt.

Wird innerhalb des Aktivierungsintervalls I_{SYN} kein Lichtimpuls registriert, so arbeitet das System nicht synchron. Demzufolge wird der Zähler auf seinen Anfangswert gesetzt, der im vorliegenden Ausführungsbeispiel eins beträgt.

Danach wird die Kontrollvariable für die Synchronbedingung auf den Wert null (kein synchroner Betrieb) gesetzt, was zu einer Störmeldung durch den Störsignalgeber 12 führt.

Danach erfolgt ein Rücksprung an den Anfang des Flußdiagramms, wonach die Synchronbedingung abfragt wird. Da diese Bedingung nicht erfüllt ist, wird das Aktivierungsintervall I_{SYN} von neuem geöffnet.

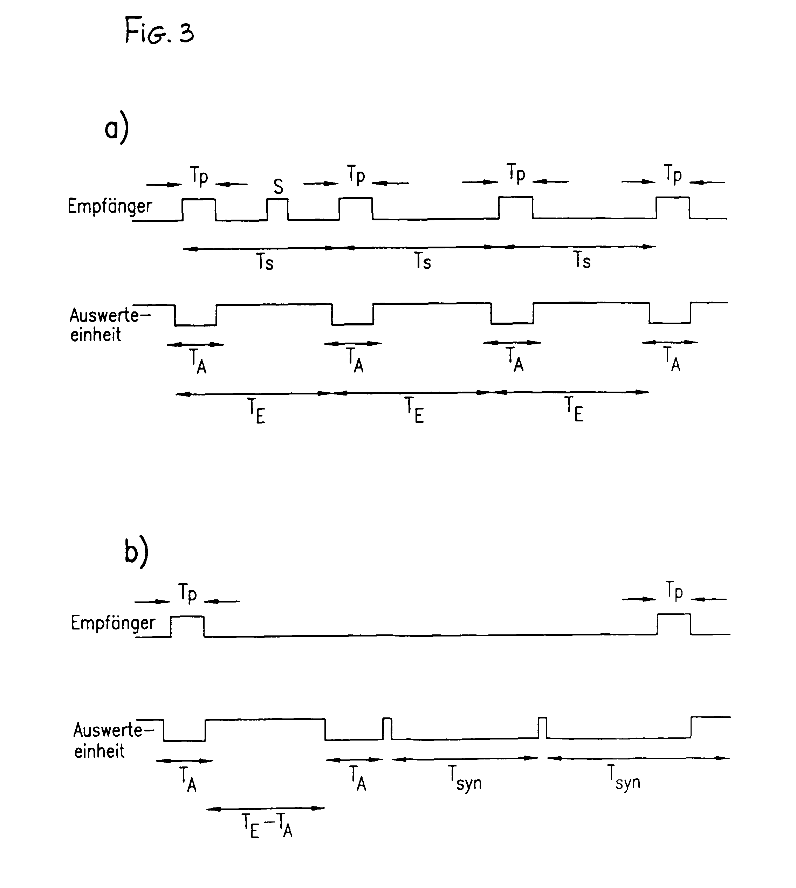

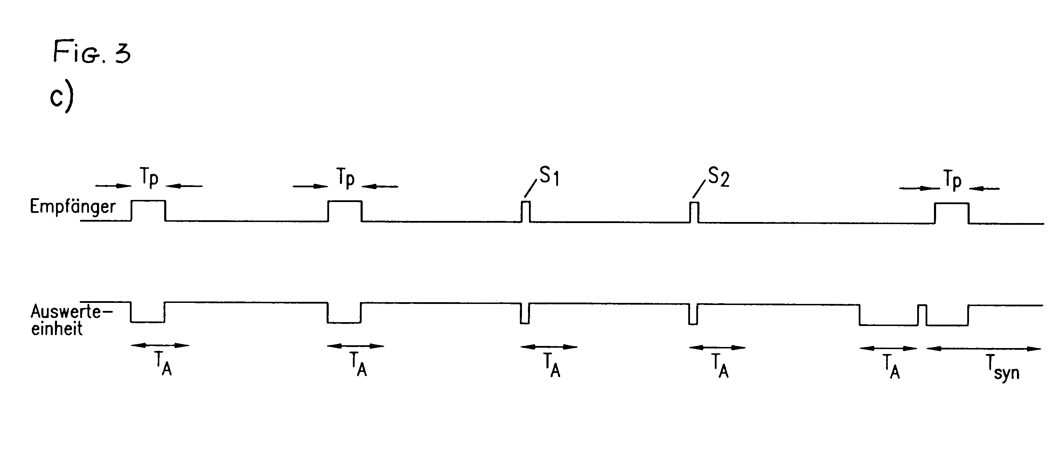

Die Funktionsweise der erfindungsgemäßen Lichtschranke 1 ist insbesondere aus den in Fig. 3a, b, c dargestellten Impulsdiagrammen ersichtlich.

In Fig. 3a ist der synchrone, fehlerfreie Betrieb der Lichtschranke 1 bei freiem Strahlengang dargestellt. Die vom Sender 2 periodisch emittierten Lichtimpulse mit der Pulsdauer T_{P} und der Periodendauer T_{S} treffen fortlaufend auf den Empfänger 3. Bei synchronem Betrieb wird in der Auswerteeinheit 11 fortlaufend der linke Zweig des in Fig. 2 dargestellten Flußdiagramms durchlaufen. Während einer Pause mit der konstanten Dauer T_{E} - T_{A} werden in der Auswerteeinheit 11 keine Lichtimpulse registriert. Demzufolge werden asynchron auftretende Störimpulse S in der Auswerteeinheit 11 ausgeblendet, wodurch die Störanfälligkeit der Lichtschranke 1 beträchtlich reduziert wird.

Nach Ablauf der Pause wird das Aktivierungsintervall I_{A} geöffnet. Die Dauer des Aktivierungsintervalls beträgt T_{A} und ist geringfügig größer als die Pulsdauer T_{P}. Die Größe der Pause T_{E} - T_{A} ist so gewählt, daß die Periodendauer T_{E} geringfügig größer als die Periodendauer T_{S} ist, falls das Aktivierungsintervall I_{A} vollständig durchlaufen wird. Demzufolge fällt der vom Sender emittierte Lichtimpuls mit Sicherheit in das Aktivierungsintervall I_{A}.

Sobald der Lichtimpuls registriert wurde, wird das Aktivierungsintervall I_{A} geschlossen und von neuem eine Pause T_{E} - T_{A} aktiviert. Bei fehlerfreiem Betrieb der Lichtschranke 1 wiederholt sich dieser Vorgang fortlaufend. Dabei wird die Periodendauer T_{E} durch das vorzeitige Beenden des Aktivierungsintervalls I_{A} gleich der Periodendauer T_{S} des Senders 2. Dies bedeutet, daß Sender 2 und empfangsseitige Auswerteeinheit 11 vollkommen synchron arbeiten.

In Fig. 3b ist der Fall dargestellt, daß der Strahlengang der Lichtschranke 1 kurzzeitig durch einen Objekteingriff unterbrochen ist. Das Objekt unterbricht den Strahlengang nur kurzzeitig, so daß zwei aufeinanderfolgende, vom Sender 2 emittierte Lichtimpulse nicht auf den Empfänger 3 treffen.

Bei Auftreffen des ersten Lichtimpulses auf den Empfänger 3 arbeitet die Lichtschranke 1 noch im synchronen Betrieb, wie er in Fig. 3a beschrieben wurde. Entsprechend wird der Lichtimpuls innerhalb des Aktivierungsintervalls I_{A} erkannt, wonach eine Pause der Länge T_{E} - T_{A} folgt. Danach wird das Aktivierungsintervall I_{A} von neuem geöffnet. Jedoch wird innerhalb des Zeitintervalls T_{A} kein Lichtimpuls registriert.

Die Lichtschranke arbeitet somit nicht mehr synchron, worauf eine Abzweigung in den rechten Zweig des in Fig. 2 dargestellten Flußdiagramms erfolgt. Unmittelbar nach dem Schließen des Aktivierungsintervalls I_{A} wird ein zweites Aktivierungsintervall I_{SYN} geöffnet. Die Dauer des Aktivierungsintervalls I_{SYN} beträgt T_{SYN}, dessen maximale Dauer gleich der Periodendauer T_{S} ist.

Innerhalb dieses Aktivierungsintervalls I_{SYN} wird fortlaufend abgefragt, ob ein Lichtimpuls auf den Empfänger 3 aufgetroffen ist. Bei dem in Fig. 3b dargestellten Fall trifft innerhalb des ersten Aktivierungsintervalls I_{SYN} kein Lichtimpuls auf den Empfänger 3. Demzufolge wird der Zähler in der Auswerteeinheit 11 auf seinen Anfangswert gesetzt und danach das Aktivierungsintervall I_{SYN} von neuem geöffnet.

Innerhalb des zweiten Aktivierungsintervalls I_{SYN} trifft ein vom Sender 2 emittierter Lichtimpuls auf den Empfänger 3. Unmittelbar nachdem dieser Lichtimpuls in der Auswerteeinheit 1 registriert worden ist, wird das Aktivierungsintervall I_{SYN} vorzeitig geschlossen, der Zählerstand um eins erhöht, womit der Sollwert zwei des Zählers erreicht wird.

Somit liegt wieder ein synchroner Betrieb der Lichtschranke 1 vor. Demzufolge erfolgt die weitere Auswertung in der Auswerteeinheit 11 gemäß dem linken Zweig des Flußdiagramms in Fig. 2.

Entscheidend ist, daß die maximale Dauer T_{SYN} des Aktivierungsintervalls I_{SYN} gleich der Periodendauer T_{S} der vom Sender 2 emittierten Lichtimpulse ist. Ist der Strahlengang für mehrere Periodendauern T_{S} unterbrochen, so wird in der Auswerteeinheit 11 im Takt der vom Sender 2 emittierten Lichtimpulse nach dem Auftreffen weiterer Lichtimpulse auf den Empfänger 3 abgefragt. Dadurch wird eine anfangs vorliegende Synchronisierung in der Auswerteeinheit 11 als Parameter mitgeführt, so daß bei Erkennen von Lichtimpulsen des Senders 2 nach einer längeren Pause sofort wieder ein synchroner Betrieb vorliegt. Trifft nach einer längeren Pause jedoch ein asynchroner Störimpuls auf den Empfänger 3, so wird eventuell auf diesen Störimpuls fälschlicherweise kurzzeitig synchronisiert. Dieser Fehler wird jedoch sofort erkannt, da die nachfolgenden, vom Sender 2 emittierten Lichtimpulse nicht zu diesem Störimpuls synchron sind.

In Fig. 3c ist der Fall dargestellt, daß der Strahlengang durch einen Objekteingriff kurzzeitig unterbrochen ist. Die Dauer der Unterbrechung beträgt wiederum das Doppelte der Periodendauer T_{S}. Innerhalb dieser Unterbrechungszeit treffen zwei kurzzeitige Störimpulse S₁, S₂ auf den Empfänger 3. Die Störimpulse S₁, S₂ treffen dabei nahezu im Gleichtakt mit den vom Sender 2 emittierten Lichtimpulsen auf den Empfänger 3, jedoch treffen sie etwas früher als ein regulärer Lichtimpuls auf den Empfänger 3. Zudem ist ihre Pulsdauer erheblich kürzer als die Pulsdauer T_{P} eines vom Sender 2 emittierten Lichtimpulses.

Die beiden ersten Lichtimpulse, die gemäß Fig. 3c auf den Empfänger 3 auftreffen, sind reguläre, vom Sender 2 emittierte Lichtimpulse. Diese Lichtimpulse werden in der Auswerteeinheit 11 ausgewertert, wobei der linke Zweig des Flußdiagramms in Fig. 2 durchlaufen wird, d. h. es liegt ein synchroner Betrieb der Lichtschranke 1 vor.

Nach Registrieren des zweiten Lichtimpulses wird nach einer Pause der Dauer T_{E} - T_{A} das Aktivierungsintervall I_{A} von neuem geöffnet. In dieses Aktivierungsintervall I_{A} fällt der erste Störimpuls S₁, der von der Auswerteeinheit 11 registriert wird. Obwohl der Störimpuls gegenüber einem vom Sender 2 emittierten Lichtimpuls etwas früher auftritt und auch eine kürzere Pulsdauer als dieser aufweist, wird der Störimpuls S₁ nicht als Störung erkannt, da er entsprechend einem synchronen Betrieb der Lichtschranke 1 in das Aktivierungsintervall I_{A} fällt. Demzufolge wird der synchrone Betrieb der Lichtschranke 1 aufrecht erhalten und auf dieselbe Weise der zweite Lichtimpuls S₂ ausgewertet.

Durch den Empfang der Störimpulse wird das Aktivierungsintervalls I_{A} vorzeitig geschlossen und die Periodendauer T_{E} so weit verkürzt, daß nach Beenden der Strahlunterbrechung der vom Sender 2 zum Empfänger 3 gelangende Lichtimpuls nicht mehr in das Aktivierungsintervall I_{A}, welches nach dem Registrieren von S₂ geöffnet wurde, fällt. Das Aktivierungsintervall I_{A} wird geschlossen bevor der Lichtimpuls auf den Empfänger 3 auftrifft. Durch das Auftreffen der nahezu resonant auftretenden Störimpulse S₁, S₂ wurde demzufolge die Synchronisation der Lichtschranke 1 gestört.

In diesem Fall findet in der Auswerteeinheit 11 nach Schließen des Aktivierungsintervalls I_{A} eine Abzweigung in den rechten Zweig des Flußdiagramms statt und das Aktivierungsintervall I_{SYN} wird geöffnet. Innerhalb dieses Intervalles wird der vom Sender 2 emittierte Lichtimpuls erkannt, worauf der Zählerstand des Zählers um eins erhöht wird. Somit liegt wieder ein synchroner Betrieb vor, so daß der linke Zweig des Flußdiagramms durchlaufen wird. Der fehlerfreie Betrieb der Lichtschranke 1 ist somit wieder hergestellt.

Die in Fig. 3 dargestellten Anwendungsbeispiele zeigen, daß der synchrone Betrieb der Lichtschranke 1 auch bei Strahlenunterbrechungen und bei Störeinstrahlungen, die nahezu resonant zu den vom Sender emittierten Lichtimpulsen sind, aufrecht erhalten wird.

Asynchrone Störsignale werden von der erfindungsgemäßen Lichtschranke 1 vollkommen unterdrückt. Zudem kann sogar eine nahezu resonante Störeinstrahlung nahezu vollständig eliminiert werden.

## Patentansprüche

1. Verfahren zur Elimination von Störsignalen bei einer Lichtschranke mit einem Sender, einem Empfänger und einer an den Empfänger angeschlossenen Auswerteeinheit, wobei der Sender periodisch Folgen von Lichtimpulsen mit einer definierten Pulsdauer T_{P} und einer definierten Periodendauer T_{S} emittiert, dadurch gekennzeichnet, daß die am Ausgang des Empfängers (3) anstehenden Empfangssignale in der Auswerteeinheit (11) während zeitlich begrenzter Aktivierungsintervalle I_{A}, I_{SYN} registriert werden, daß das erste Aktivierungsintervall I_{A} periodisch mit einer Periodendauer T_{E} geöffnet wird, wobei für die maximale Dauer der Aktivierung T_{A} gilt:
T_{A} > T_{P} und T_{A} < T_{S} und T_{A} < T_{E} ,
daß das Öffnen des Aktivierungsintervalls I_{A} fortlaufend wiederholt wird, solange während des Aktivierungsintervalls I_{A} ein Lichtimpuls registriert wird, wobei das Aktivierungsintervall I_{A} unmittelbar nach Registrieren des Lichtimpulses in der Auswerteeinheit (11) vorzeitig geschlossen wird, und wobei die Periodendauer T_{E} gleich der Periodendauer T_{S} oder geringfügig größer als diese ist, daß bei Nichterkennen eines Lichtimpulses während des Aktivierungsintervalls I_{A} ein zweites Aktivierungsintervall I_{SYN} geöffnet wird, dessen Dauer T_{SYN} maximal T_{S} beträgt, und die Aktivierung des Aktivierungsintervalls I_{SYN} solange wiederholt wird bis ein Lichtimpuls registriert wird, und daß unmittelbar nach Registrieren eines Lichtimpulses während des Aktivierungsintervalls I_{SYN} dieses geschlossen wird, wonach innerhalb der Periodendauer T_{E} das Aktivierungsintervall I_{A} geöffnet wird.

2. Verfahren nach Anspruch 1, dadurch gekennzeichnet, daß nach Erkennen eines Lichtimpulses innerhalb einer der Aktivierungsintervalle I_{A}, I_{SYN} der Zählerstand eines Zählers erhöht wird, und daß das Erreichen eines vorgegebenen Sollwertes des Zählerstandes die Synchronbedingung für den synchronen Betrieb des Senders (2) und der Auswertung der Empfangssignale in der Auswerteeinheit (11) darstellt.

3. Verfahren nach Anspruch 2, dadurch gekennzeichnet, daß der Zählerstand jeweils um den Wert eins erhöht wird, und daß für den Sollwert der Wert zwei gewählt wird.

4. Verfahren nach Anspruch 2 oder 3, dadurch gekennzeichnet, daß das Aktivierungsintervall I_{A} mit der Periodendauer T_{E} fortlaufend aktiviert wird, solange die Synchronbedingung erfüllt ist.

5. Verfahren nach einem der Ansprüche 1 - 4, dadurch gekennzeichnet, daß das Aktivierungsintervall I_{SYN} unmittelbar nach Schließen des Aktivierungsintervalls I_{A} geöffnet wird.

6. Lichtschranke zur Durchführung des Verfahrens zur Elimination von Störsignalen nach einem der Ansprüche 1 - 5 mit einem Sender, einem Empfänger und einer an den Empfänger angeschlossenen Auswerteeinheit, wobei der Sender periodisch Folgen von Lichtimpulsen mit einer definierten Pulsdauer T_{P} und einer definierten Periodendauer T_{S} emittiert, dadurch gekennzeichnet, dass die am Ausgang des Empfängers (3) anstehenden Empfangssignale in der Auswerteeinheit (11) während zeitlich begrenzter Aktivierungsintervalle I_{A}, I_{SYN} registriert werden, dass Mittel zum periodischen Öffnen eines ersten Aktivierungsintervalls I_{A} mit einer Periodendauer T_{E} vorgesehen sind, wobei für die maximale Dauer der Aktivierung T_{A} gilt:
T_{A} > T_{P} und T_{A} < T_{S} und T_{A} < T_{E} ,
und wobei das Öffnen des Aktivierungsintervalls I_{A} fortlaufend wiederholt wird, solange während des Aktivierungsintervalls I_{A} ein Lichtimpuls registriert wird, dass Mittel zum vorzeitigen Schließen des Aktivierungsintervalls I_{A} unmittelbar nach Registrieren des Lichtimpulses in der Auswerteeinheit (11) vorgesehen sind derart, dass die Periodendauer T_{E} gleich der Periodendauer T_{S} oder geringfügig größer als diese ist, dass Mittel zum Öffnen eines zweiten Aktivierungsintervalls I_{SYN} vorgesehen sind, wobei das Öffnen von I_{SYN} bei Nichterkennen eines Lichtimpulses während des Aktivierungsintervalls I_{A} erfolgt und dessen Aktivierung solange wiederholt wird, bis ein Lichtimpuls registriert wird, und wobei die Dauer T_{SYN} des Aktivierungsintervalls I_{SYN} maximal T_{S} beträgt, dass Mittel zum Schließen des Aktivierungsintervalls I_{SYN} unmittelbar nach Registrieren eines Lichtimpulses vorgesehen sind und dass Mittel zum Öffnen des Aktivierungsintervalls I_{A} innerhalb der Periodendauer T_{E} nach Schließen des Aktivierungsintervalls I_{SYN} vorgesehen sind.

7. Lichtschranke nach Anspruch 6, dadurch gekennzeichnet, dass der Sender (2) und der Empfänger (3) jeweils in einem separaten Gehäuse (4, 4') integriert sind, und dass die Auswerteeinheit (11) von einem im Gehäuse (4') des Empfängers (3) integrierten Microcontroller gebildet ist.

8. Lichtschranke nach Anspruch 7, dadurch gekennzeichnet, dass die am Ausgang des Empfängers (3) anstehenden Empfangssignale über einen Komparator (10) einem Eingang eines die Auswerteeinheit (11) bildenden Microcontrollers zugeführt werden.

9. Lichtschranke nach Anspruch 7 oder 8, dadurch gekennzeichnet, dass am Gehäuse (4') des Empfängers (3) ein Störsignalgeber (12) vorgesehen ist, welcher ein Störsignal abgibt, sobald die Synchronbedingung nicht erfüllt ist.

## Claims

1. Method for elimination of disturbance signals in a light barrier with a transmitter, a receiver and an evaluating unit connected to the receiver, wherein the transmitter emits periodic trains of light pulses with a defined pulse duration T_{P} and a defined period duration T_{S}, characterised in that the received signals arising at the output of the receiver (3) are registered in the evaluating unit (11) during activation intervals I_{A}, I_{SYN} limited in time, that the first activation interval I_{A} is periodically opened by a period duration T_{E}, wherein for the maximum duration of the activation T_{A} there applies:
T_{A} > T_{P} and T_{A} < T_{S} and T_{A} < T_{E},
that the opening of the activation interval I_{A} is continuously repeated so long as a light impulse is registered during the activation interval I_{A}, wherein the activation interval I_{A} is prematurely closed directly after registration of the light pulse in the evaluating unit (11), and wherein the period duration T_{E} is the same as the period duration T_{S} or slightly larger than this, that in the case of non-recognition of a light pulse during the activation interval I_{A} a second activation interval I_{SYN} is opened, the duration T_{SYN} of which amounts at the most to T_{S}, and the activation of the activation interval I_{SYN} is repeated for as long as until a light pulse is registered, and that directly after registration of a light pulse during the activation interval I_{SYN} this is closed, whereafter the activation interval I_{A} is opened within the period duration T_{E}.

2. Method according to claim 1, characterised in that after recognition of a light pulse within one of the activation intervals I_{A}, I_{SYN} the counter state of a counter is increased, and that the attainment of a predetermined target value of the counter state represents the synchronisation condition for the synchronous operation of the transmitter (2) and the evaluation of the received signals in the evaluating unit (11).

3. Method according to claim 2, characterised in that the counter state is increased each time by the value one and that the value two is selected for the target value.

4. Method according to claim 2 or 3, characterised in that the activation interval I_{A} with the period duration T_{E} is continuously activated as long as the synchronisation condition is fulfilled.

5. Method according to one of claims 1 to 4, characterised in that the activation interval I_{SYN} is opened directly after closure of the activation interval I_{A}.

6. Light barrier for carrying out the method for elimination of disturbance signals according to one of claims 1 to 5, with a transmitter, a receiver and an evaluating unit connected to the receiver, wherein the transmitter emits periodic trains of light pulses with a defined pulse duration T_{P}, characterised in that the received signals arising at the output of the receiver (3) are registered in the evaluating unit (11) during activation intervals I_{A}, I_{SYN} limited in time, that means are provided for period opening of a first activation interval I_{A} with a period duration T_{E}, wherein for the maximum duration of the activation T_{A} there applies:
T_{A} > T_{P} and T_{A} < T_{S} and T_{A} < T_{E},
and wherein the opening of the activation interval I_{A} is continuously repeated so long as a light pulse is registered during the activation interval I_{A}, that means are provided for premature closing of the activation interval I_{A} directly after registration of the light pulse of the evaluating unit (11) in such a manner that the period duration T_{E} is the same as the period duration T_{S} or slightly larger than this, that means are provided for the opening of a second activation interval I_{SYN}, wherein the opening of I_{SYN} takes place on non-recognition of a light pulse during the activation interval I_{A} and the activation thereof is repeated for so long as until a light pulse is registered, and wherein the duration T_{SYN} of the activation interval I_{SYN} amounts at the most to T_{S}, that means are provided for closing the activation interval I_{SYN} directly after registration of a light pulse and that means are provided for opening of the activation interval I_{A} within the period duration T_{E} after closing of the activation interval I_{SYN}.

7. Light barrier according to claim 6, characterised in that the transmitter (2) and the receiver (3) are each integrated in a separate housing (4, 4') and that the evaluating unit (11) is formed by a microcontroller integrated in a housing (4') of the receiver (3).

8. Light barrier according to claim 7, characterised in that the received signals arising at the output of the receiver (3) are fed by way of a comparator (10) to an input of a microcontroller forming the evaluating unit (11).

9. Light barrier according to claim 7 or 8, characterised in that a disturbance signal transmitter (12), which issues a disturbance signal as soon as the synchronisation condition is not fulfilled, is provided at the housing (4') of the receiver (3).

## Revendications

1. Procédé et dispositif pour l'élimination de signaux parasites dans une barrière lumineuse comprenant un émetteur, un récepteur et une unité d'interprétation raccordée au récepteur, l'émetteur émettant périodiquement des séries d'impulsions photoniques avec une durée d'impulsion définie T_{P} et une durée de période définie T_{S}, **caractérisé** en ce que les signaux reçus apparaissant à la sortie du récepteur (3) sont enregistrés dans l'unité d'interprétation (11) pendant des intervalles d'activation I_{A,} I_{SYN} limités dans le temps, en ce que le premier intervalle d'activation I_{A} est ouvert périodiquement avec une durée de période T_{E}, la durée maximale de l'activation T_{A} satisfaisant aux relations suivantes :
T_{A} > T_{P} et T_{A} < T_{S} et T_{A} < T_{E},
en ce que l'ouverture de l'intervalle d'activation I_{A} est continuellement répétée tant qu'une impulsion photonique est enregistrée pendant l'intervalle d'activation I_{A,} l'intervalle d'activation I_{A} étant prématurément fermé immédiatement après l'enregistrement de l'impulsion photonique dans l'unité d'interprétation (11), et la durée de période T_{E} étant égale ou légèrement supérieure à la durée de période T_{S}, en ce que, si aucune impulsion photonique n'est reconnue pendant l'intervalle d'activation I_{A}, un deuxième intervalle d'activation I_{SYN} est ouvert, dont la durée T_{SYN} est au maximum égale à T_{S}, et l'activation de l'intervalle d'activation I_{SYN} est répétée jusqu'à ce qu'une impulsion photonique soit enregistrée, et en ce que, immédiatement après l'enregistrement d'une impulsion photonique pendant l'intervalle d'activation I_{SYN}, cet intervalle est fermé, à la suite de quoi l'intervalle d'activation I_{A} est ouvert pendant la durée de période T_{E}.

2. Procédé selon la revendication 1, **caractérisé** en ce que la position d'un compteur est augmentée à la suite de la reconnaissance d'une impulsion photonique pendant un des intervalles d'activation I_{A,} I_{SYN}, et en ce que l'atteinte d'une valeur de consigne prédéfinie de la position du compteur constitue la condition de synchronisation pour le fonctionnement synchrone de l'émetteur (2) et de l'interprétation des signaux reçus dans l'unité d'interprétation (11).

3. Procédé selon la revendication 2, **caractérisé** en ce que la position du compteur est chaque fois augmentée de un, et en ce qu'on choisit comme valeur de consigne la valeur deux.

4. Procédé selon la revendication 2 ou 3, **caractérisé** en ce que l'intervalle d'activation I_{A} est continuellement activé avec la durée de période T_{E} tant que la condition de synchronisation est remplie.

5. Procédé selon une des revendications 1 à 4, **caractérisé** en ce que l'intervalle d'activation I_{SYN} est ouvert immédiatement après la fermeture de l'intervalle d'activation I_{A}.

6. Barrière lumineuse pour la mise en oeuvre du procédé d'élimination de signaux parasites selon une des revendications 1 à 5, comprenant un émetteur, un récepteur et une unité d'interprétation raccordée au récepteur, l'émetteur émettant périodiquement des séries d'impulsions photoniques avec une durée d'impulsion définie T_{P} et une durée de période définie T_{S}, **caractérisée** en ce que les signaux reçus apparaissant à la sortie du récepteur (3) sont enregistrés dans l'unité d'interprétation (11) pendant des intervalles d'activation I_{A,} I_{SYN} limités dans le temps, en ce que des moyens sont prévus pour l'ouverture périodique d'un premier intervalle d'activation I_{A} avec une durée de période T_{E}, la durée maximale de l'activation T_{A} satisfaisant aux relations suivantes :
T_{A} > T_{P} et T_{A} < T_{S} et T_{A} < T_{E},
et l'ouverture de l'intervalle d'activation I_{A} étant continuellement répétée tant qu'une impulsion photonique est enregistrée pendant l'intervalle d'activation I_{A}, en ce que des moyens sont prévus pour la fermeture prématurée de l'intervalle d'activation I_{A} immédiatement après l'enregistrement de l'impulsion photonique dans l'unité d'interprétation (11), de telle sorte que la durée de période T_{E} est égale ou légèrement supérieure à la durée de période T_{S}, en ce que des moyens sont prévus pour l'ouverture d'un deuxième intervalle d'activation I_{SYN}, l'ouverture d'I_{SYN} s'effectuant si aucune impulsion photonique n'est reconnue pendant l'intervalle d'activation I_{A} et l'activation d'I_{SYN} étant répétée jusqu'à ce qu'une impulsion photonique soit enregistrée, et la durée T_{SYN} de l'intervalle d'activation I_{SYN} étant au maximum égale à T_{S}, en ce que des moyens sont prévus pour fermer l'intervalle d'activation I_{SYN} immédiatement après l'enregistrement d'une impulsion photonique, et en ce que des moyens sont prévus pour, à la suite de la fermeture de l'intervalle d'activation I_{SYN}, ouvrir l'intervalle d'activation I_{A} pendant la durée de période T_{E}.

7. Barrière lumineuse selon la revendication 6, **caractérisée** en ce que l'émetteur (2) et le récepteur (3) sont intégrés chacun dans un boîtier séparé (4, 4'), et en ce que l'unité d'interprétation (11) est formée par un microprocesseur intégré dans le boîtier (4') du récepteur (3).

8. Barrière lumineuse selon la revendication 7, **caractérisée** en ce que les signaux reçus apparaissant à la sortie du récepteur (3) sont apportés par l'intermédiaire d'un comparateur (10) à une entrée d'un microprocesseur constituant l'unité d'interprétation (11).

9. Barrière lumineuse selon la revendication 7 ou 8, **caractérisée** en ce qu'un générateur de signaux de dérangement (12) est prévu sur le boîtier (4') du récepteur (3), générateur qui délivre un signal de dérangement dès que la condition de synchronisation n'est pas remplie.
